# EUROPÄISCHE PATENTANMELDUNG

(11) **EP 1 205 830 A1**
(43) Veröffentlichungstag der Anmeldung: **15.05.2002**
(21) Anmeldenummer: 00124548.9
(22) Anmeldetag: 09.11.2000
(51) Int. Cl.: G05B 19/4065

(54) **Verfahren, Computerprogrammprodukt und Rechnersystem zur Instandhaltung**

(71) Anmelder: SIEMENS AKTIENGESELLSCHAFT, 80333 München (DE)
(72) Erfinder: Hofmann, Horst, 91088 Bubenreuth (DE)

(57) **Zusammenfassung**

Die Instandhaltung einer technischen Anlage (1) soll zeit- und kostenoptimiert durchgeführt werden.

Dazu ist ein Verfahren, ein Computerprogrammprodukt und ein Rechnersystem zur Instandhaltung vorgesehen, mittels derer das Verschleißverhalten von Anlagenkomponenten (3,5,7,...n) prognostiziert und daraus ein Wartungszeitpunkt (110) und/oder eine Wartungshandlung (120) festgelegt werden.

## Beschreibung

Die Erfindung bezieht sich auf ein Verfahren, ein Computerprogrammprodukt sowie ein Rechnersystem zur Instandhaltung einer aus mehreren Anlagenkomponenten bestehenden technischen Anlage.

In der Industrie sind in den verschiedenen Bereichen technische Anlagen anzutreffen, welche beispielsweise zur Herstellung eines bestimmten Erzeugnisses, zur Weiterverarbeitung oder Veredelung von Rohstoffen, zur automatisierten Durchführung von ehemals manuellen Tätigkeiten oder zur Erzeugung von insbesondere elektrischer Energie verwendet werden.

Derartige technische Anlagen bestehen im Allgemeinen aus mehreren Anlagenkomponenten, welche die einzelnen Funktionen der technischen Anlage realisieren. Viele dieser Anlagenkomponenten unterliegen während deren Betriebsdauer einem mechanischen Verschleiß. Während der Lebensdauer der technischen Anlage stellt der Verschleiß deren Anlagenkomponenten ein großes Problem dar, weil bei Überschreiten einer Verschleißgrenze die Funktion der technischen Anlage oder zumindest eine ihrer Teilfunktionen nicht mehr gewährleistet ist.

Wird die verschleißbeeinträchtigte Anlagenkomponente nicht rechtzeitig ersetzt, so führt deren übermäßiger Verschleiß im Allgemeinen zumindest zu einem Teilausfall der technischen Anlage und somit zu unerwünschten Stillstandszeiten, was wiederum zu Produktionsausfällen, entgangenem Gewinn und u.U. sehr kostspieligen Reparaturen an der technischen Anlage führen kann.

Um verschleißbedingten Ausfall zu vermeiden, ist es bekannt, Wartungsvorgänge an bestimmten Anlagenkomponenten vorzunehmen, sobald diese eine bestimmte Betriebsdauer aufweisen, also wenn beispielsweise ein Motor 10000 Betriebsstunden absolviert hat, ein Ventil z.B. 5000 Schaltspiele vorgenommen hat oder ein Auto z.B. 15000 km Fahrtstrecke zurückgelegt hat. Dabei wird durch statistische Auswertung ohne Berücksichtigung tatsächlicher Belastungen aufgrund von Erfahrungen eine sogenannte vorbeugende Wartung durchgeführt.

Nachteilig bei diesem aus dem Stand der Technik bekannten Vorgehen ist, dass dabei oftmals Komponenten gewartet oder ausgetauscht werden, welche aufgrund ihrer tatsächlichen Verfassung durchaus geeignet wären, ihre Funktion weiterhin zumindest innerhalb eines bestimmten Zeitraumes zu gewährleisten. Eine solche oftmals überflüssige Wartung führt also zu hohen finanziellen Belastungen, um die sichere Funktion der Anlagenkomponenten zu gewährleisten.

Weiterhin ist es bekannt, Anlagenkomponenten zu warten bzw. auszutauschen, wenn diese in ihrem Betriebsverhalten Auffälligkeiten zeigen.

Zur Erkennung von Auffälligkeiten werden Sensoren an den Anlagenkomponenten oder in deren Umfeld installiert und mit Überwachungseinrichtungen verbunden. Diese erzeugen Überwachungsmeldungen, die dann im Allgemeinen vom Wartungspersonal einer technischen Anlage zu interpretieren sind. Aus dieser Interpretation ist dann ein entsprechender Schluss auf mutmaßlich notwendige Wartungsmaßnahmen zu ziehen. Dieses Vorgehen kann dazu führen, dass Wartungsmaßnahmen zu spät eingeleitet werden, da die Überwachung oftmals nur anhand von sekundären Messwerten erfolgt und die primäre Schadensursache damit zu spät oder gar nicht erfasst wird. Ein typisches Beispiel ist hierfür ein Kavitationsschaden in einer Pumpe, der primär nicht messbar ist und nur aufgrund der sekundären Messwerte, wie z.B. dem Mediumsdruck, der Mediumstemperatur oder dem Mediumsdurchfluss erkannt werden kann.

Weiterhin nutzen Überwachungseinrichtungen, die auf klassischen, analogen Messverfahren des Drucks, der Temperatur, der Drehzahl, des Durchflusses usw. basieren, nicht die gesamte Bandbreite von Informationen wie sie z.B. auch im Rauschen der Signale und Energieströme enthalten sind. Sie verzichten damit auf ein hohes Informationsangebot zur Überwachung und Diagnose des Verhaltens von Komponenten.

Der größte Nachteil von zu spät eingeleiteten Wartungsmaßnahmen besteht darin, dass diese unweigerlich zu einem Anlagenstillstand führen.

Das Einleiten von Wartungsmaßnahmen aufgrund von Sensordaten kann weiterhin dazu führen, dass Wartungsvorgänge unnötig eingeleitet werden, da die Überwachung aufgrund der vorher genannten sekundären Messwerte nicht das reale Verschleiß- oder Schadensbild wiedergibt, sondern nur deren Symptome, welche nicht zwangsläufig miteinander korrespondieren müssen.

Überflüssig eingeleitete Wartungsvorgänge führen zu einer Bearbeitung und/oder Austausch von an sich noch funktionsfähigen Anlagenkomponenten und damit zu überflüssigen laufenden finanziellen Kosten.

Der Erfindung liegt daher die Aufgabe zugrunde, ein Verfahren, ein Computerprogrammprodukt und ein Rechnersystem zur Instandhaltung einer aus mehreren Anlagenkomponenten bestehenden technischen Anlage anzugeben, welche eine zeit- und kostengerechte Wartung der technischen Anlage gewährleisten.

Bezüglich des erfindungsgemäßen Verfahrens wird die Aufgabe durch ein Verfahren zur Instandhaltung einer aus mehreren Anlagenkomponenten bestehenden technischen Anlage mit folgenden Schritten gelöst:
1. Das Verschleißverhalten wenigstens einer Anlagenkomponente wird simuliert.
2. Dem Verschleißverhalten wird wenigstens ein Verschleißparameter zugeordnet.
3. Die zukünftige Entwicklung des Wertes des wenigstens einen Verschleißparameters wird prognostiziert.
4. Aus der prognostizierten zukünftigen Entwicklung des Wertes des wenigstens einen Verschleißparameters wird mindestens ein Wartungszeitpunkt und/oder mindestens eine Wartungshandlung der betreffenden Anlagenkomponente abgeleitet.

Der Vorteil des erfindungsgemäßen Verfahrens besteht insbesondere darin, dass der Wartungszeitpunkt und/oder die Wartungshandlung auf den tatsächlich vorliegenden Verschleiß abgestellt sind. Durch die Vorhersage des Verschleißverhaltens ist es möglich, den Wartungszeitpunkt und/oder die Wartungshandlung gezielt dann vorzunehmen, wenn der Verschleiß einer oder mehrerer Anlagenkomponenten eine zulässige Toleranzschwelle überschritten hat. Dadurch wird verhindert, dass eine Wartung zu früh oder zu spät eingeleitet wird, also dass unnötige Kosten für nicht notwendige Wartungsmaßnahmen entstehen und dass die Wartungshandlung in einem zu großen, nicht notwendigen Umfang durchgeführt wird.

In vorteilhafter Ausgestaltung der Erfindung werden in mindestens einer Datenbank abgespeicherte aktuelle Prozessdaten und/oder archivierte Langzeitspeicher-Prozessdaten zur Simulierung des Verschleißverhaltens herangezogen.

Dadurch wird die Simulierung des Verschleißverhaltens genauer, weil dadurch zum einen die aktuell tatsächlich vorliegenden verschleißrelevanten Prozessdaten in die Simulation einfließen. Zum anderen können mögliche zukünftige, das Verschleißverhalten bestimmende Belastungen besser vorweggenommen werden, weil die Langzeitspeicher-Prozessdaten archivierte Werte verschleißbestimmender Prozessdaten beinhalten, welche in der Vergangenheit tatsächlich vorgelegen haben. Findet man nun z.B. in den archivierten Langzeitspeicher-Prozessdaten vergangene Prozessdaten, welche mit den aktuellen Prozessdaten z.B. hinsichtlich einer aktuell vorliegenden Betriebssituation gut übereinstimmen, so besteht eine große Wahrscheinlichkeit, dass sich die aktuellen Prozessdaten zukünftig ähnlich verhalten werden wie die identifizierten archivierten Langzeitspeicher-Prozessdaten. Diese archivierten Langzeitspeicher-Prozessdaten können dann in die Simulation einfließen und so die Vorhersage des Verschleißverhaltens deutlich verbessern.

Vorteilhaft wird der Wartungszeitpunkt und/oder die Wartungshandlung mit Hilfe eines Diagnosesystems abgeleitet. Das Diagnosesystem ist dabei ein spezialisiertes System, welches aufgrund der aktuellen Werte von Eingabedaten - wie z.B. der prognostizierten zukünftigen Entwicklung des Wertes eines Verschleißparameters - einen Schluss auf das Vorliegen einer bestimmten aktuellen oder zukünftigen Verschleiß-Situation zieht und daraus ggf. Maßnahmen ableitet, wie z.B. das Erzeugen einer Warnmeldung, das Erzeugen einer Störmeldung oder auch das Ermitteln eines Wartungszeitpunkts, an dem die Anlage oder Anlagenkomponente spätestens gewartet werden muss. Das Erkennen einer aktuellen oder zukünftigen Verschleiß-Situation durch das Diagnosesystem kann auch gleichzeitig mit entsprechenden Handlungsvorschlägen verknüpft werden.

Wie bei handelsüblichen Diagnosesystemen erfasst und verknüpft das erfindungsgemäße Diagnosesystem vorteilhaft Expertenwissen bezüglich der technischen Anlage oftmals unter Zuhilfenahme von Methoden der Fuzzy-Logic und "selbstlernender" neuronaler Netze.

Die Erfindung führt weiterhin zu einem Computerprogrammprodukt, das direkt in den internen Speicher eines digitalen Computers geladen werden kann und Softwarecodeabschnitte umfasst, mit denen die Schritte gemäß Anspruch 1 ausgeführt werden, wenn das Produkt auf einem Computer läuft.

Die Erfindung führt weiterhin zu einem Rechnersystem zur Instandhaltung einer aus mehreren Anlagenkomponenten bestehenden technischen Anlage, wobei das Rechnersystem ein Simulationssystem zur Simulation des Verschleißverhaltens wenigstens einer Anlagenkomponente umfasst und ertüchtigt ist, die zukünftige Entwicklung des Wertes eines dem Verschleißverhalten zugeordneten wenigstens eines Verschleißparameters zu prognostizieren und daraus mindestens einen Wartungszeitpunkt und/oder mindestens eine Wartungshandlung abzuleiten.

In einer vorteilhaften Ausgestaltung der Erfindung umfasst dieses Rechnersystem eine Datenbank, in welcher aktuelle Prozessdaten und/oder archivierte Langzeitspeicher-Prozessdaten abgelegt sind.

Wie bereits bei dem entsprechenden Anspruch bezüglich des erfindungsgemäßen Verfahrens angeführt, können derartige Prozessdaten in die Simulation und Prognose einfließen, um deren Zuverlässigkeit zu erhöhen.

In weiterer vorteilhafter Ausgestaltung der Erfindung umfasst das Rechnersystem ein Diagnosesystem, mittels dessen der Wartungszeitpunkt und/oder die Wartungshandlung ableitbar sind.

Bekannte Diagnosesysteme, welche z.B. die Methoden der Fuzzy-Logic verwenden, sind besonders geeignet, Expertenwissen bezüglich des Verhaltens der technischen Anlage in den verschiedensten Betriebssituationen zu akquirieren. Die Simulations- und Prognosedaten des Simulationssystems können dann als Eingangsdaten in das Diagnosesystem einfließen, welches unter Einbeziehung dieser Daten und des akquirierten Expertenwissens einen Wartungszeitpunkt und/oder eine Wartungshandlung ableitet.

Vorteilhaft umfasst das Rechnersystem ein Trainingssystem mittels dessen Simulationen getestet und neue Simulationsaufgaben konzipierbar sind.

Das Trainingssystem dient dazu, interaktiv mit dem Simulationssystem zu arbeiten und z.B. Selbstlernmechanismen zu entwickeln, zu modifizieren, zu validieren und zu verifizieren. Bei dem Trainingssystem handelt es sich also um eine Test-Plattform, mittels derer die Simulationen, Prognosen usw. getestet werden können, bevor sie beim realen Betrieb der technischen Anlage zum Einsatz kommen. Des Weiteren kann das Trainingssystem zu Schulung des Bedienpersonals verwendet werden, um dieses mit dem Instandhaltungssystem vertraut zu machen. Dadurch, dass das Trainingssystem vom realen technischen Prozess abgekoppelt ist, können die Funktionen des Rechnersystems zur Instandhaltung getestet und geschult werden, ohne dass damit ein u. U. gefährlicher Eingriff in den Betrieb der technischen Anlage verbunden ist.

Vorteilhaft umfasst das Rechnersystem weiterhin ein Engineeringsystem, mittels dessen das gesamte Rechnersystem handhabbar ist.

Das Engineeringsystem gewährleistet die technologische, ingenieurmäßige Handhabung des Rechnersystems, vorzugsweise auf graphischer Ebene. Dazu gehören beispielsweise die Installation des Gesamtsystems, das Einbringen der technologischen Aufgabenstellung, das Einbringen der Daten und Parameter, die Festlegung der Darstellungen und Kommunikationen über die Mensch-Maschine-Schnittstelle, die etwaige Einbindung in ein Prozessleitsystem sowie ggf. die Verbindung zu internen und externen Netzen und anderen EDV-Systemen.

Weiterhin umfasst das Rechnersystem vorteilhaft ein Multimediasystem, mittels dessen die Ausführung von Wartungsaufgaben unterstützt ist.

Bei Wartungsvorgängen oder zusätzlichen Diagnosemaßnahmen werden dem Anwender multimediale Funktionen, wie z.B. Bild- und Toninformationen, am Ort der Tätigkeit über entsprechende Ausgabegeräte, wie z.B. Bildschirm, Laptop, Headset, Lautsprecher usw., bereitgestellt, welche die Arbeiten unterstützen und verfolgen. Das System kann auch interaktiv ausgestaltet sein und z.B. Vorgänge speichern, um sie später wieder in vergleichbaren Situationen zur Verfügung zu stellen.

Im Folgenden werden zwei Ausführungsbeispiele der Erfindung näher dargestellt. Es zeigen:
- FIG 1: eine mit einem Rechnersystem zur Instandhaltung verbundene technische Anlage und
- FIG 2: eine Prinzipskizze eines Rechnersystems zur Instandhaltung.

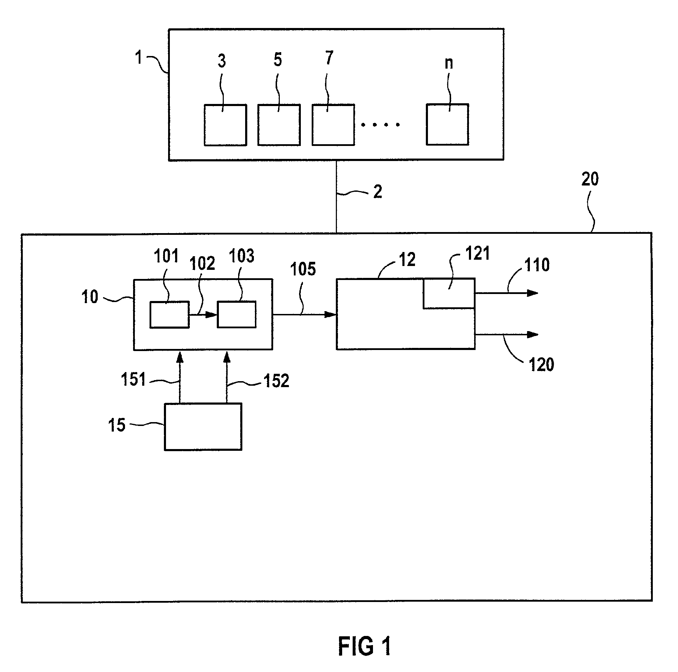

In FIG 1 ist eine technische Anlage 1 dargestellt, welche aus mehreren Anlagenkomponenten 3, 5, 7,...n besteht. Die technische Anlage 1 ist über eine Datenverbindung 2 verbunden mit einem Rechnersystem 20 zur Instandhaltung. In einem Simulationsmodul 101 eines Simulationssystems 10 des Rechnersystems 20 wird das Verschleißverhalten der Anlagenkomponenten 3, 5, 7,...n simuliert und diesem Verschleißverhalten mindestens ein Verschleißparameter 102 zugeordnet. Zur Simulation des Verschleißverhaltens macht das Simulationssystem 10 Gebrauch von in einer Datenbank 15 abgelegten aktuellen Prozessdaten 151 und archivierten Langzeitspeicher-Prozessdaten 152.

In einem Prognosemodul 103 werden Daten 105 zur Erfassung der zukünftigen Entwicklung des Verschleißparameters 102 ermittelt.

Diese Daten 105 des prognostizierten Verlaufs des Verschleißparameters 102 werden an ein nachgeschaltetes Diagnosesystem 12 übergeben. Das Diagnosesystem 12 enthält eine Expertenwissensbasis 121, in welcher Wissen aus den Betriebserfahrungen der technischen Anlage beispielsweise mit Hilfe der Methoden der Fuzzy-Logic akquiriert und verknüpft ist.

Das Diagnosesystem 12 ermittelt aus der prognostizierten Entwicklung des Verschleißparameters 102 einen Wartungszeitpunkt 110 und/oder eine Wartungshandlung 120 der betreffenden Anlagenkomponenten.

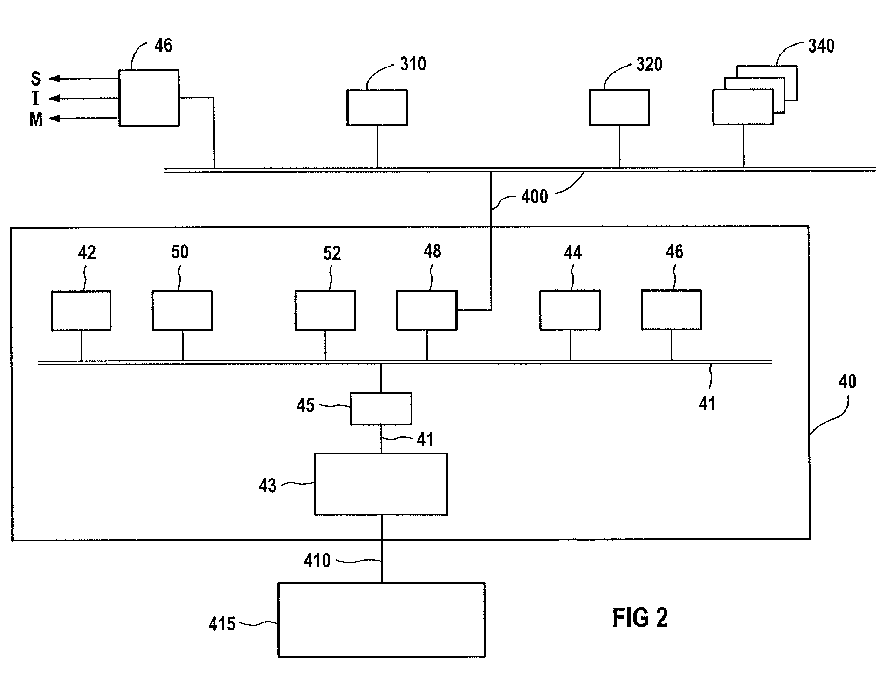

FIG 2 zeigt ein Rechnersystem 40 zur Instandhaltung, welches aus mehreren Teilkomponenten besteht. Die Teilkomponenten des Rechnersystems 40 sind untereinander über eine Kommunikationsverbindung 41 verbunden.

In einem Simulationssystem 50 werden alle Komponenten und Systeme der technischen Anlage im Hinblick auf wartungsrelevante Aspekte simuliert. Dazu erhält das Simulationssystem 50 aus einer Datenbank 45 aktuelle und archivierte Prozessdaten. Um diese Daten aus den Prozessen der technischen Anlage zu erhalten, ist die Datenbank 45 über ein Gateway 43 durch eine Kommunikationsverbindung 410 mit dem Prozessleitsystem 415 der technischen Anlage verbunden. Dadurch, dass das Simulationssystem 50 Zugriff auf die in der Datenbank 45 gespeicherten aktuellen und archivierten Prozessdaten hat, ist die vom Simulationssystem 50 ermittelte Prognose des Verschleißverhaltens sehr zuverlässig, da das Simulationssystem seine Simulationsergebnisse mit den realen aktuellen oder abgespeicherten Prozessdaten abgleichen kann.

Wenn im Simulationssystem 50 klassische Simulationsmethoden, wie z.B. die Modellierung des Verschleißverhaltens mit Hilfe von mathematischen Gleichungen eingesetzt werden, ist der Aussagewert der Simulationsergebnisse von Beginn an sehr hoch. Es können jedoch auch modernere Methoden zur Simulation eingesetzt werden, wie z.B. Neuro-Fuzzy-Technik mit entsprechenden Selbstlernmechanismen. Diese moderneren Methoden bieten sich dann an, wenn das Verschleißverhalten mathematisch exakt nicht erfassbar ist. Die Aussage-Zuverlässigkeit von derartigen Methoden steigt dann erst im Laufe der Zeit, wenn immer mehr Lernzyklen durchgeführt werden.

Im Diagnosesystem 52 werden die Simulationsergebnisse des Simulationssystems 50 ausgewertet und zu Informationen, Entscheidungsvorlagen und Handlungsaussagen verarbeitet.

Das Diagnosesystem 52 ist weiterhin mit einer Mensch-Maschine-Schnittstelle 48 verbunden. An die Mensch-Maschine-Schnittstelle 48 sind über eine Kommunikationsverbindung 400 Einheiten - wie z.B. eine Bildschirmeinheit 310, ein Drucker 320 oder Kommunikationsgeräte 340 - angeschlossen, mit deren Hilfe das Rechnersystem 40 durch das Bedienpersonal bedient werden kann. Über ein an die Kommunikationsverbindung 400 ebenfalls angeschlossenes Gateway 46 sind darüber hinaus auch Kommunikationen des Rechnersystems 40 zu entfernten EDV-Systemen über Satelliten S, Internet I oder Mobilfunk M möglich.

Ein Engineering-System 44, welches an die Kommunikationsverbindung 41 angeschaltet ist, dient hauptsächlich dazu, die Gesamtstruktur und die Funktionen des Rechnersystems 40 softwaremäßig aufzubauen, zu modifizieren und dem jeweiligen technischen Stand und den Erfordernissen der technischen Anlage anzupassen. U.a. dient das Engineering-System auch zur Wartung und zum Qualitätsmanagement des gesamten Rechnersystems 40.

Ein ebenfalls an die Kommunikationsverbindung 41 angeschaltetes Multimediasystem 46 enthält multimediale Informationen wie z.B. Bild- und Toninformationen, welche auf die in der technischen Anlage durchzuführenden Wartungsmaßnahmen bezogen sind. Bei diesen Informationen kann es sich z.B. um Videoinformationen handeln, welche beispielsweise die Wartung an einer bestimmten Anlagenkomponente als Film darstellen und so dem Wartungspersonal als Handlungsanweisung dienen können.

Über entsprechende Kommunikationsverbindungen innerhalb der technischen Anlage können diese multimedialen Informationen bedarfsgerecht an den jeweiligen Ort der Wartungsmaßnahme übertragen werden und so das Wartungspersonal unterstützen. Das Multimediasystem 46 kann auch interaktiv sein und z.B. durchgeführte Wartungsmaßnahmen speichern um sie später wieder im Bedarfsfall z. B. am Ort einer Wartungsmaßnahme zur Verfügung zu stellen.

## Patentansprüche

1. Verfahren zur Instandhaltung einer aus mehreren Anlagenkomponenten (3,5,7,...n) bestehenden technischen Anlage (1) mit folgenden Schritten:
a) das Verschleißverhalten wenigstens einer Anlagenkomponente (3,5,7,...n) wird simuliert,
b) dem Verschleißverhalten wird wenigstens ein Verschleißparameter (102) zugeordnet,
c) die zukünftige Entwicklung des Wertes des wenigstens einen Verschleißparameters (102) wird prognostiziert, und
d) aus der prognostizierten zukünftigen Entwicklung des Wertes des wenigstens einen Verschleißparameters (102) wird mindestens ein Wartungszeitpunkt (110) und/oder mindestens eine Wartungshandlung (120) der betreffenden Anlagenkomponente (3,5,7,...n) abgeleitet.

2. Verfahren nach Anspruch 1,
**dadurch gekennzeichnet, dass** in mindestens einer Datenbank (15) abgespeicherte aktuelle Prozessdaten (151) und/oder archivierte Langzeitspeicher-Prozessdaten (152) zur Simulierung des Verschleißverhaltens herangezogen werden.

3. Verfahren nach einem der Ansprüche 1 oder 2,
**dadurch gekennzeichnet, dass** der Wartungszeitpunkt (110) und/oder die Wartungshandlung (120) mit Hilfe eines Diagnosesystems (12) abgeleitet wird.

4. Computerprogrammprodukt, das direkt in den internen Speicher eines digitalen Computers geladen werden kann und Softwarecodeabschnitte umfasst, mit denen die Schritte gemäß Anspruch 1 ausgeführt werden, wenn das Produkt auf einem Computer läuft.

5. Rechnersystem zur Instandhaltung einer aus mehreren Anlagenkomponenten (3,5,7,...n) bestehenden technischen Anlage,
**dadurch gekennzeichnet, dass** das Rechnersystem (20) ein Simulationssystem (10) zur Simulation des Verschleißverhaltens wenigstens einer Anlagenkomponente (3,5,7...n) umfasst und ertüchtigt ist, die zukünftige Entwicklung des Wertes eines dem Verschleißverhalten zugeordneten wenigstens eines Verschleißparameters (102) zu prognostizieren und daraus mindestens einen Wartungszeitpunkt (110) und/oder mindestens eine Wartungshandlung (120) abzuleiten.

6. Rechnersystem nach Anspruch 5,
**gekennzeichnet durch** mindestens eine Datenbank (15), in welcher aktuelle Prozessdaten (151) und/oder archivierte Langzeitspeicher-Prozessdaten (152) abgelegt sind.

7. Rechnersystem nach einem der Ansprüche 5 oder 6,
**gekennzeichnet durch** ein Diagnosesystem (12), mittels dessen der Wartungszeitpunkt (110) und/oder die Wartungshandlung (120) ableitbar sind.

8. Rechnersystem nach einem der Ansprüche 5 bis 7,
**gekennzeichnet durch** ein Trainingssystem (42), mittels dessen Simulationen getestet und neue Simulationsaufgaben konzipierbar sind.

9. Rechnersystem nach einem der Ansprüche 5 bis 8,
**gekennzeichnet durch** ein Engineeringsystem (44), mittels dessen das gesamte Rechnersystem (40) handhabbar ist.

10. Rechnersystem nach einem der Ansprüche 5 bis 9,
**gekennzeichnet durch** ein Multimediasystem (46), mittels dessen die Ausführung von Wartungsaufgaben unterstützt ist.
